# EUROPEAN PATENT APPLICATION

(11) **EP 0 893 305 A2**
(43) Date of publication of application: **27.01.1999**
(21) Application number: 98305777.9
(22) Date of filing: 20.07.1998
(51) Int. Cl.: B60Q 1/14

(54) **Complex wide-angle system of motor vehicle front lighting**

(30) Priority: 22.07.1997 CZ 232797
(71) Applicant: AUTOPAL S.R.O., CZ-741 11 Novy Jicin (CZ)
(72) Inventor: Cejnek, Milan, 74101 Novy Jicin (CZ); Nejezchleba, Tomas, 74101 Novy Jicin (CZ)
(74) Representative: Parry, Christopher Stephen

(57) **Abstract**

Complex wide-angle system of motor vehicle front lighting consisting of minimally two separated headlights placed in front of a vehicle, whereby said headlights (1) and (2) or (11) and (12) that produce light beams (3) and (4) or (13) and (14). provided on the upper side at least partially with a horizontal cut off (15) between light and darkness that are not a part of a dipped or a driving light, are asymmetric with regard to the longitudinal axis (8) of a vehicle (7) and they are used together with said dipped or said driving light for wide-angle lighting of the space in front of a vehicle (7). Optical axes (5), (6) of said headlights (1), (2) producing symmetrical light beams (3), (4) are rotated with regard to the longitudinal axis (8) of said vehicle (7) or said light beams (13). (14) of said headlights (11), (12) are asymmetrical, whereby their light spread is larger in the direction away from the longitudinal axis (8) of said vehicle (7).

## Description

The present invention relates to a motor vehicle front lighting that operates together with a main dipped light or a main driving light or independently.

The existing conventional systems of motor vehicle front lighting for dipped and driving lights produce light beams having a shape that remains the same without any consideration of the vehicle speed, drive direction change or traffic situation. To increase drive safety multi-source systems were developed that change illumination of the space in the front of a vehicle according to the driving circumstances.

Said existing multi-source systems exhibit small lighting efficiency of individual lighting functions as a consequence of dimensional constraints of the built-in unit and as a consequence of using more light sources in one lighting device they also exhibit an increased level of glare.

The above mentioned disadvantages are removed by a system of headlights that is not a part of the dipped or driving light systems. The system enables common operation of the dipped or the driving lights together with one or both wide-angle light beams, whereby their use depends on driving circumstances.

The system is designed so that said vehicle is provided with a system of front lighting which is comprised of two separated headlights minimally, that are positioned in front of a vehicle. Light beams of said headlights are asymmetric with regard to the vehicle longitudinal symmetry plain. The asymmetry of said headlight light beams is such that the light spread is larger in the direction away from the vehicle longitudinal axis. This is reached either by turning the axes of the headlights that produce symmetric light beams or by using headlights that produce asymmetric light beams.

Both headlights are used together with the dipped or the driving light at low speed, for a drive in rugged terrain, in driving through more complicated traffic situations, e.g. for passing an intersection or independently in adverse weather conditions and at a decreased visibility.

Switching on of both headlights simultaneously is controlled either by an independent switch or by means of a speed indicator, whereby they are switched on if the vehicle speed drops under a set limit and they are switched off if a set vehicle speed limit is exceeded.

Only one headlight is used for driving into a bend, namely the one which illuminates the road side which is in the direction of the vehicle turn.

Switching on of one headlight is controlled either by an independent switch, a side direction indicator switch or by means of a steering wheel position indicator, whereby it is switched on when the steering wheel angle exceeds a set limit and it is switched off if the steering wheel angle decreases under a set limit.

This system of front lighting can be combined with front fog lights.

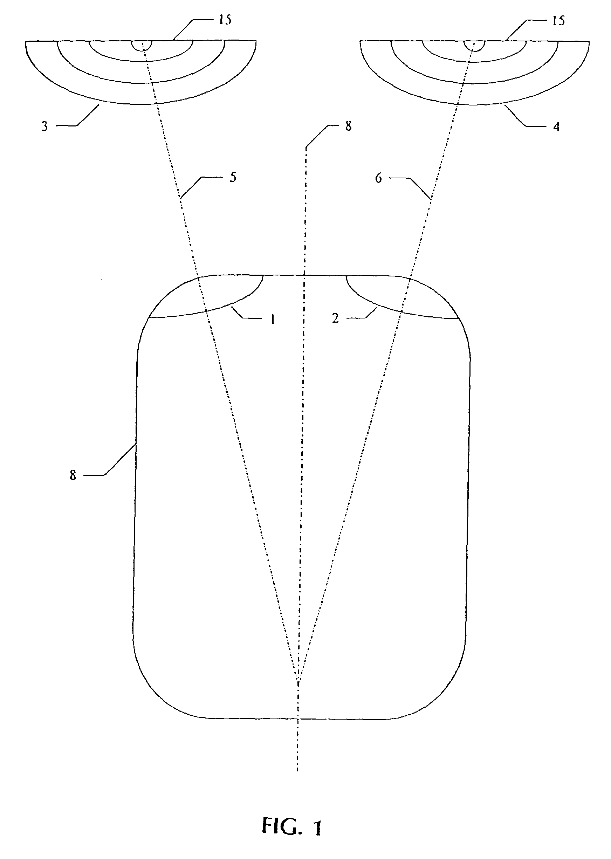

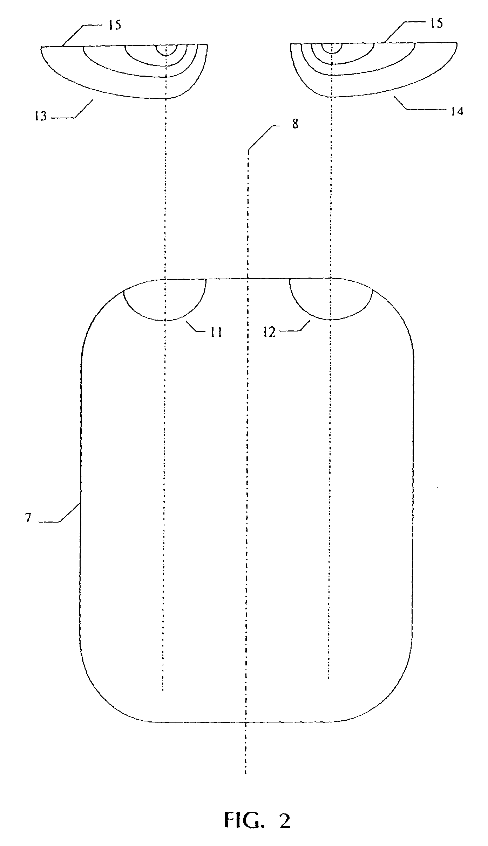

The invention will be further illustrated by means of the attached drawings where Figure 1 is an embodiment with headlights producing symmetrical light beams and Figure 2 is an embodiment with headlights producing asymmetric light beams and with axes of light beams parallel to the vehicle longitudinal axis.

The embodiment according to Figure 1 is comprised of headlights 1 and 2 producing symmetrical light beams 3 and 4, provided on their upper side at least in a part of them with a horizontal cut off between light and darkness 15 that are not a part of the dipped nor the driving lights whereby their axes 5 and 6 are rotated with regard to the longitudinal axis 8 of a vehicle 7 and they are used together with the dipped or the driving light for a wide-angle lighting of the space in front of a vehicle 7 during a low-speed driving mode and/or during a direction change of said vehicle 7.

The embodiment according to Figure 2 is comprised of headlights 11 and 12 producing asymmetrical light beams 13 and 14, whereby their light spread is greater in the direction away from the longitudinal axis 8 of a vehicle 7.

The present invention will find use in front lighting of motor vehicles, operated on road transport.

## Claims

1. A complex wide-angle system for a motor vehicle front lighting comprising at least two separated headlights placed at the front of the vehicle, characterized in that said headlights (1,2; 11,12) produce light beams (3,4; 13,14) which are provided on their upper side at least partially with a horizontal cut off (15) between light and darkness; wherein the headlights are not a part of a dipped or a driving light, are asymmetric with regard to the longitudinal axis (8) of the vehicle (7) and are used together with the dipped or the driving light for a wide-angle lighting of the space in front of the vehicle (7) during a slow driving mode and/or during a driving direction change of said vehicle (7).

2. A complex wide-angle system for a motor vehicle front lighting according to Claim 1, characterized in that the optical axes (5,6) of said headlights (1,2) producing symmetrical light beams (3,4) are rotated with regard to the longitudinal axis (8) of said vehicle (7).

3. A complex wide-angle system for a motor vehicle front lighting according to Claim 1, characterized in that said light beams (13,14) of said headlights are asymmetrical, whereby their light spread is larger in the direction away from the longitudinal axis (8) of said vehicle (7).
